# EUROPEAN PATENT APPLICATION

(11) **EP 1 623 999 A1**
(43) Date of publication of application: **08.02.2006**
(21) Application number: 05022136.5
(22) Date of filing: 26.04.1993
(51) Int. Cl.: C08F 2/34, C08F 10/00, B01J 8/24

(54) **Process for polymerizing monomers in fluidized beds**

(62) Divisional of application: 93912358.4
(71) Applicant: ExxonMobil Chemical Patents Inc., Baytown, TX 77520-5200 (US)
(72) Inventor: Dechellis, Marc Louis, Houston TX 77058 (US); Griffin, John, Robert, Baytown TX 77520 (US)
(74) Representative: UEXKÜLL & STOLBERG

(57) **Abstract**

The present invention relates to a gas fluidized bed polymerization process comprising passing a gaseous stream comprising olefin-type monomer through a fluidized bed reactor in the presence of a catalyst under reactive conditions to produce polymeric product and a stream comprising unreacted monomer gases, compressing and cooling said stream, mixing said stream with feed components and returning a gas and liquid phase to said reactor. The process further comprises cooling said stream such that the liquid phase is greater than 15 % by weight of the total weight of the returned stream and the stream composition is such that the ratio of fluidized bulk density to settled bulk density is over 0.59.

## Description

### FIELD OF THE INVENTION

The invention relates to methods for determining stable operating zones for gas fluidized bed polymerization and to a process for gas phase polymerization. For the purpose of the specification the term "gas fluidized bed polymerization" refers to polymerization process in which a bed of polymer particles is cooled, fluidized and agitated by a passing stream of gas which includes monomer; with or without additional mechanical agitation of the bed.

### GENERAL TECHNICAL BACKGROUND

Plants for gas fluidized bed polymerization employ a continuous cycle. In one part of the cycle, in a reactor a cycling gas stream is heated by the heat of a polymerization. This heat is removed in another part of the cycle by a cooling system externally to the reactor. Catalyst is added, continuously or intermittently, as well as additional monomer to replace consumed monomer. Polymer particles are withdrawn for finishing.

Large scale plants are expensive and highly productive. Downtime is costly. Risks associated with experimentation in such plants are high. Therefore it is difficult to explore design and operating boundaries experimentally in view of the costs and risks.

The invention provides a method of determining a stable operating zone for gas fluidized bed polymerization to facilitate optimum design of the plant and the determination of desirable process conditions in a given plant design.

### DETAILED TECHNICAL BACKGROUND

A gas fluidized bed reactor may be controlled to give the desired melt index and density for the polymer at an optimum production. Great care is generally taken to avoid conditions which can lead to formation of chunks or sheets or, in a worse case, an unstable fluidized bed which collapses, or causes polymer particles to fuse together. The control of a fluidized bed therefore has to be exercised to reduce chunking and sheeting and to prevent bed collapse or a need to terminate the reaction and shut down the reactor. This is the reason why commercial scale reactors are designed to operate well within proven stable operating zones, and why the reactors are used in a carefully circumscribed fashion.

Even within the constraints of conventional, safe operation, control is complex adding further to the difficulty and uncertainty of experimentation if one wishes to find new and improved operating conditions.

There are target values, determined by the polymer and the catalyst, for the operating temperature, the ratio of comonomer(s) to monomer and the ratio of hydrogen to monomer. The reactor and cooling system are contained within pressure vessels. Their contents are monitored, without unduly interfering with fluidization by measuring amongst others (1) the pressure at the top; (2) pressure differential at different heights along the bed, (3) temperature upstream of the bed; (4) temperature in the fluidized bed and temperature downstream of the bed as well as (5) the gas composition and (6) gas flow rate. These measurements are used to control the catalyst addition, the monomer partial pressure and velocity of the recycle gas amongst others. Polymer removal is constrained in certain cases by the settled bulk density (non-fluidized) or the fluidized bulk density depending on plant design and these too must be watched as well as the ash level in the polymer. The plant is a closed system. In operation changes in the process of one or more of the measured values lead to consequential changes elsewhere. In the design of plant the optimization of capacity depends on the most restricting element in the overall design.

There is no generally accepted view as to what causes chunking or sheeting. Obviously some fusing together of the polymer particles is involved, possibly because of insufficient heat transfer caused by inadequate fluidization in the fluidized bed. However, no clear correlations have thus far been found between individual settings and measurements and the occurrence of chunking and sheeting. The entirety of the measured values and controls is used therefore conventionally to stay within known, safe operating areas for a given plant design.

It is desirable to provide a gas fluidized bed polymerization process giving a maximum reactor productivity.

### THE PRIOR ART

Jenkins, et al. in U.S. Patent Nos. 4,588,790 and 4,543,399 illustrated the difficulty and complexity of control in general and of trying to extend the stable operating zone to optimize the space time yield.

In Jenkins, et al. the recycle gas is cooled and added to the reactor at a temperature below the dew point so that condensed fluids evaporate inside the reactor. The cooling capacity of the recycle gas can be increased further while at given temperature of the cooling heat transfer medium. One option described is to add non-polymerizing materials (isopentane) that increase the dew point. Because of greater cooling more heat can be removed; higher space time yields are said to be possible. Jenkins, et al. recommends not exceeding 20 weight percent, preferably 2 to 12 weight percent, of condensed liquid in the recycle gas. Potential hazards disclosed include the formation of "mud" (U.S. 4,588,790, column 5, line 35-39); maintaining a sufficiently high recycle gas speed (column 6, lines 12-20) or avoiding accumulation of liquid on a distributor plate (column 6, lines 28-32). Only if the condensed material is added to the bed directly (column 8, lines 16-20) can more than 20% condensed be used.

Of particular interest from the perspective of this invention are examples 6, 7 and 10a employing 14.2, 10.5 and 12.9 mole percent of isopentane in a recycle stream which are cooled respectively to 65.9, 34.0 and 53.5°C to give condensed liquid levels of respectively 11.5, 10.5 and 14.3 wt. % and space time yields of 7.0, 10.7 and 6.2 (lb/hr-ft³).

Jenkins, et al. is silent on where upper limits for non-polymerizable or polymerizable condensable materials lie and the question of how to optimize the space time yield using condensed mode. Jenkins, et al. does not assign any particular role to the fluidized bulk density nor is there any suggestion that the composition of the recycle stream is relevant in determining stable operating zone at higher space time yields.

It is hence amongst the aims of the invention to help determine stable operating zones for a gas fluidized bed process and plant design, to find criteria for running a process safely with low risk of malfunction and at the same time high reactor productivities, and/or to avoid any constriction in the overall plant capacity due to the reactor productivity.

### SUMMARY OF THE INVENTION

According to the invention, variations in the fluidized bulk density (FBD) for a given grade of polymer and/or catalyst composition can be used to optimize process conditions and plant design. Whereas Jenkins, et al. suggests that the percentage of condensed liquid helps to define an upper limit to the amount of cooling which can be performed and hence what space time yield can be achieved, the invention uses FBD to define safe operating zones which may involve even higher amounts of condensed liquid than disclosed by Jenkins, et al.

The invention hence provides in a first aspect in a fluidized bed polymerization process comprising passing a gaseous stream comprising monomer through a fluidized bed reactor in the presence of catalyst under reactive conditions to produce polymeric product and a stream comprising unreacted monomer gases, compressing and cooling said stream, mixing said stream with feed components and returning a gas and liquid phase to said reactor, a method of determining stable operating conditions which comprises: (a) observing fluidized bulk density changes in the reactor associated with changes in the composition of the fluidizing medium; and (b) increasing the cooling capacity of the recycle stream by changing the composition without exceeding the level at which a reduction in the fluidized bulk density or a parameter indicative thereof becomes irreversible. The fluidized bulk density is occasionally abbreviated herein to FBD; the settled bulk density is SBD. As a general rule a reduction in the ratio ofFBD to SBD to less than 0.59 may involve risk of fluidized bed disruption and is to be avoided.

The fluidized bulk density is the ratio of the measured pressure drop upward across a centrally fixed portion of the reactor to the height of this fixed portion. It should be understood that under certain conditions known to those skilled in the art, a mean value may be measured which is greater or less than the actual bed bulk density.

Applicants have discovered that as the concentration of condensable component is increased in the gaseous stream flowing through the bed, an identifiable point may be reached beyond which there is danger of catastrophic failure of the process if the concentration is further increased. This point is characterized by an irreversible decrease in the fluidized bulk density with an increase in condensable fluid concentration in the gas. The liquid content of the recycle stream entering the reactor may not be directly relevant. The decrease in fluidized bulk density generally occurs with no corresponding change in the settled bulk density of the final product granules. Thus, the change in fluidization behavior reflected by the decrease in fluidized bulk density apparently does not involve permanent change in the characteristics of the polymer particles.

The gas condensable fluid concentrations at which decreases in fluidized bulk density occur depend upon the type of polymer being produced and other process conditions. They may be identified by monitoring the fluidized bulk density as condensable fluid concentrations in the gas are increased for a given type of polymer and other process conditions.

The fluidized bulk density depends on other variables in addition to the condensable fluid concentration in the gas, including for example the superficial velocity of the gas flowing through the reactor, the fluidized bed height and the settled bulk density of the product as well as gas and particle densities, temperature and pressure. Thus, in tests to determine changes in fluidized bulk density attributable to changes in gas condensable fluid concentration, significant changes in other conditions should be avoided.

While some modest drop in fluidized bulk density may be accommodated without the loss of control, further changes in gas composition or other variables which also increase the dew point temperature may be accompanied by a significant and irreversible decrease in the fluidized bulk density, with development of "hot spots" in the reactor bed and/or, formation of fused agglomerates, which will eventually lead to a reactor shutdown.

Other practical consequences directly related to the reduction of the fluidized bulk density include a reduced polymer capacity of a fixed-volume reactor discharge system and reduced polymer/catalyst reactor residence time at constant polymer production rate. The latter may, for a given catalyst, reduce the catalyst productivity and increase the level of catalyst residues in the product polymer. In practice of using the invention it is desirable to minimize the condensable fluid concentration in the gas for a given target reactor production rate and associated cooling requirement.

Using such fluidized bulk density variations, a stable operating zone can be defined. Once a suitable composition has been identified, the composition may be used to achieve much higher cooling capacities for the recycle stream (without encountering bed instabilities) by cooling that composition to a greater degree. Condensable, non-polymerizable materials may be added in appropriate amounts for a particular grade to achieve high reactor productivity whilst preserving good conditions in the fluidized bed by staying within the so determined stable operating zone. High reactor productivity can be achieved in a process or, in terms of plant design, a large capacity plant can be designed with a relatively small reactor diameter or existing reactors can be modified to provide increased capacity without changing the reactor size.

At higher reactor productivities it has been found that, staying within the boundaries defined by the fluidized bulk density changes, levels of condensed liquid well over 15%, 20% or even 25% can be accommodated whilst avoiding significant levels of chunking or sheeting resulting from fluidized bed disruption.

Preferably the fluidized bulk density is observed by using a pressure difference measurement from a part of the fluidized bed not prone to disturbances over the distributor plate. Whereas conventionally fluidized bulk density variations in the lower part of the bed can be taken to be indicative of bed disruption over the distributor plate, with the upper fluidized bulk density measured remote from the distributor plate being used to serve as a stable reference, it has now surprisingly been found that the changes in the upper fluidized bulk density correlate to change in the composition of the stream and can be used to find and define stable operating zones.

The cooling capacity can be increased in different ways. Preferably the cooling capacity is increased by increasing the proportion of components which increase the dew point. This may involve increasing the proportion of a non-polymerizable higher hydrocarbon component, or alternatively, of the polymerizable monomers including a comonomer having from 3 to 12 carbon atoms by reducing the proportion of non-condensable inert. Where appropriate in a particular process the cooling capacity of the recycle stream can be further increased by reducing the temperature of the fluidizing medium for example by refrigeration. After having determined safe operating zones improved process conditions are obtainable.

In a second aspect of the invention therefore there is provided a gas fluidized bed polymerization process for the polymerization of polymer by passing a gaseous stream comprising monomer through a fluidized bed reactor in the presence of a catalyst under reactive conditions, to produce polymeric product and a stream comprising unreacted monomer gases, compressing and cooling said stream, mixing said stream with feed components and returning a gas phase and a liquid phase to said reactor, the improvement which comprises cooling said stream such that the liquid phase is greater than 15 percent preferably greater than 20 percent by weight of the total weight of the returned stream and the stream composition is such that the ratio of fluidized bulk density to settled bulk density is over 17.8 to 30.2, preferably 18.1 to 30.2.

In a third aspect of the invention there is provided a gas fluidized bed polymerization process for the polymerization of polymer by passing a gaseous stream comprising monomer through a fluidized bed reactor in the presence of a catalyst under reactive conditions, to produce polymeric product and a stream comprising unreacted monomer gases, compressing and cooling said stream, mixing said stream with feed components and returning a gas phase and a liquid phase to said reactor, the improvement which comprises a content of polymerizable or non-polymerizable components having at least 3 carbon atoms such that the fluidized bulk density decreases reversibly if the amount of such components is raised above that content by 1 mole percent.

Advantageously the stream is cooled and passes at a velocity through the reactor such that the cooling capacity is sufficient for a reactor productivity expressed in pounds (lbs) of polymer per hour per ft² of reactor cross-sectional area exceeding 500 lb/hr-ft² (2441 kg/hr-m²), especially 600 lb/hr-ft² (2929 kg/hr-m²) involving an enthalpy change of the recycle stream from the reactor inlet conditions to the reactor outlet conditions at least 40 Btu/lb, preferably 50 Btu/lb. Preferably the liquid and gaseous component of the stream are added in a mixture below the reactor distributor plate. This reactor productivity is equal to the space time yield multiplied by the height of the fluidized bed.

In an alternate embodiment of the present invention, the recycle stream can be divided into two or more separate streams, one or more of which can be introduced directly into the fluidized bed provided that the gas velocity below and through the fluidized bed is sufficient to keep the bed suspended. For example, the recycle stream can be divided into a liquid and a gas stream which can then be separately introduced into the reactor.

In the practice of the improved process of this invention, the recycle stream comprising a mixture of a gas phase and a liquid phase within the reactor below the distributor plate can be formed by separately injecting a liquid and recycle gas under conditions which will produce a stream comprising both phases.

Significant increases in the reactor productivity are possible by increasing the cooling capacity through careful control of the composition of the gaseous stream. Problems resulting in the disruption of a fluidized bed are reduced. A greater extent of cooling can be used even to an extent which leads to an increased percentage of liquid in the recycle stream. For any given percentage of liquid in the recycle stream, the composition, temperature, pressure and superficial velocity of gas within the reactor should be controlled in relation to the composition and physical characteristics of the product particles to maintain a viable fluidized bed.

In the processes of the invention, the cooling capacity of the recycle stream may be significantly increased by both the vaporization of the condensed liquids entrained in the recycle stream and as a result of the greater temperature differential between the entering recycle stream and the fluidized bed temperature. Suitably a polymer is produced selected from a film grade material having a MI from 0.01 to 5.0, preferably 0.5 to 5.0 and a density of 0.900 to 0.930; or a molding grade material having a MI of from 0.10 to 150.0, preferably 4.0 to 150.0 and a density of from 0.920 to 0.939; or a high density material having a MI of from 0.01 to 70.0, preferably 2.0 to 70.0 and a density of from 0.940 to 0.970; all density units being in a g/cm³ and the melt index being in g/10 min determined according to ASTM-1238 condition E.

### BRIEF DESCRIPTION OF THE DRAWINGS

The foregoing objects, features, and advantages of this invention will become clearer and more fully understood when the following detailed description is read in conjunction with the accompanying drawings, in which:
FIGURE 1 is a schematic illustration of the preferred embodiment of the reactor used in the practice of the improved gas fluidized bed polymerization process for the production of polymers of this present invention.
FIGURE 2 is a plot of isopentane mole percent and fluidized bulk density of Table 1.
FIGURE 3 is a plot of isopentane mole percent and fluidized bulk density of Table 2.
FIGURE 4 is a plot comparing Figure 2 and Figure 3.

### DETAILED DESCRIPTION OF THE INVENTION

In the description which follows, like parts are indicated throughout the specification and drawing with the same reference numerals, respectively. The drawing is not necessarily to scale, and certain parts have been exaggerated to better illustrate the improved process of this invention.

This invention is not limited to any particular type or kind of polymerization reaction but is particularly well suited to the polymerization reactions involving the polymerization of one or more of the monomers, for example olefin monomers of ethylene, propylene, butene-1, pentene-1, 4-methylpentene-1, hexene-1, octene-1 and styrene. Other monomers can include polar vinyl, conjugated and non-conjugated dienes, acetylene and aldehyde monomers.

The catalysts employed in the improved process can include coordinated anionic catalysts, cationic catalysts, free-radical catalysts, anionic catalysts and include a transition metal component or a metallocene component including single or multiple cyclopentadienyl components reacted with either a metal alkyl or alkoxy component or an ionic compound component. These catalysts include partially and fully activated precursor compositions and those catalysts modified by prepolymerization or encapsulation.

Although, as previously stated, this present invention is not limited to any specific type of polymerization reaction, the following discussion of the operation of the improved process is principally directed to the polymerization of the olefin-type monomers, for example polyethylene, where this present invention has been found to be particularly advantageous.

The process operating temperature is set or adjusted to a temperature below the fusion or sticking temperature of polymer particles produced. Maintaining the temperature is important to prevent the plugging of the reactor by polymer chunks that grow rapidly if the temperature reaches high levels. These chunks of polymer may become too large to be withdrawn from the reactor as a polymer product and cause process and reactor failure. Also, chunks entering the downstream handling process of polymer product can disrupt, for example, transfer systems, drying units or extruders.

A significant increase in the reactor productivity is possible from the practice of this present improved fluidized bed polymerization process without a meaningful change in the product quality or properties. In the preferred embodiment, the overall polymerization process of this invention proceeds continuously.

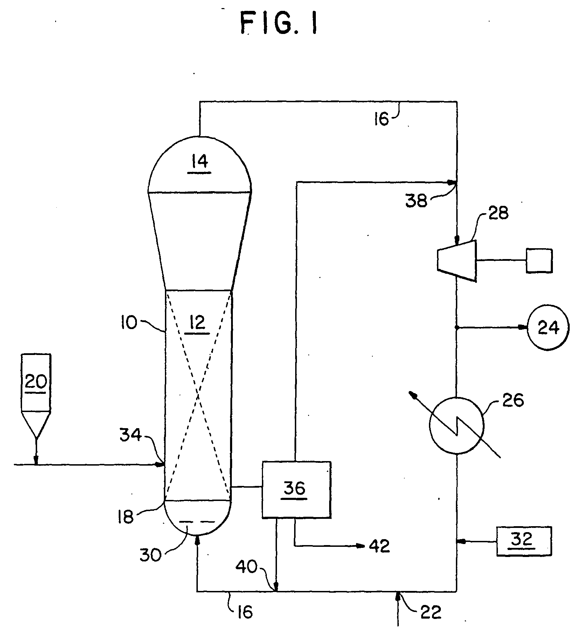

For higher cooling capacities and so higher reactor productivity it may be desirable to raise the dew point of the recycle stream to permit a larger increase in the heat removed from the fluidized bed. The dew point of the recycle stream can be increased by increasing the operating pressure of the reaction/recycle system and/or increasing the percentage of condensable fluids and decreasing the percentage of non-condensable gases in the recycle stream in the manner disclosed by Jenkins, et al. U.S. Patent Nos. 4,588,790 and 4,543,399. The condensable fluid may be inert to the catalyst, reactants and the polymer product produced; it may also include comonomers. The condensable fluid can be introduced into the reaction/recycle system at any point in the system as will be later illustrated from FIGURE 1. Examples of suitable inert condensable fluids are readily volatile liquid hydrocarbons, which may be selected from saturated hydrocarbons containing from 2 to 8 carbon atoms. Some suitable saturated hydrocarbons are propane, n-butane, isobutane, n-pentane, isopentane, neopentane, n-hexane, isohexane, and other saturated C₆ hydrocarbons, n-heptane, n-octane and other saturated C₇ and Cg hydrocarbons or mixtures thereof. The preferred inert condensable hydrocarbons are C₅ and C₆ saturated hydrocarbons. The condensable fluids may also include polymerizable condensable comonomers such as olefins, diolefins or mixtures thereof including some of the above mentioned monomers which may be partially or entirely incorporated in the polymer product.

In practicing the invention, the amount of gas in the recycle stream and the velocity of the recycle stream should be maintained at sufficient levels to keep the liquid phase of the mixture suspended in the gas phase until the recycle stream enters the fluidized bed, so that liquid does not accumulate in the bottom head of the reactor below the distributor plate. The velocity of the recycle stream must also be high enough to support and mix the fluidized bed within the reactor. It is also desirable that the liquid entering the fluidized bed be dispersed and vaporized quickly.

Controlling the composition, temperature, pressure and superficial velocity of the gas in relation to the composition and physical characteristics of the polymer is important in maintaining a viable fluidized bed. A viable fluidized bed is defined as a fluidized bed of particles that are suspended and well-mixed in a stable state under reactive conditions without the formation of significant quantities of agglomerates (chunks or sheets) which would disrupt the reactor or downstream process operations.

More than 15 weight percent of the recycle stream may be condensed, or be in a liquid phase without encountering disruption of the fluidization process provided the safe operating boundaries of the stable operating zones determined with the help of fluidized bed bulk density measurements are not exceeded.

During the polymerization process, a minor portion (typically less than about 10 percent) of the gaseous stream flowing upward through the fluidized bed reacts. That major portion of the stream that does not react passes into a region above the fluidized bed called the freeboard zone which may be a velocity reduction zone. In the freeboard zone, the larger solid polymer particles which are projected above the bed by eruption of gas bubbles through the surface or entrained in the gas stream are allowed to fall back into the fluidized bed. The smaller solid polymer particles, known in the industry as "fines", are withdrawn with the recycle stream because their terminal settling velocities are lower than the velocity of the recycle stream in the freeboard zone.

In one preferred embodiment of this present invention, the entry point for the recycle stream is preferably below the fluidized bed so as to provide a uniform flow of the recycle stream to maintain the fluidized bed in a suspended condition and to ensure uniformity of the recycle stream passing upwardly throughout the fluidized bed.

In an alternate embodiment of the present invention, the recycle stream can be divided into liquid and gas components which are separately introduced into the reactor.

The advantages of this invention are not limited to the production of polyolefins. Thus, this invention can be practiced in connection with any exothermic reaction carried out in a gas fluidized bed. The advantages of a process operating in condensed mode over other processes generally increase directly with the nearness of the dew point temperature of the recycle steam to the reaction temperature within the interior of the fluidized bed. For a given dew point, advantages of the process may increase directly with the percentage of liquid in the recycle stream returned to the reactor. The invention allows high percentages of liquid to be used in the process.

A gas fluidized bed reactor which is particularly well suited to production of polymers by the process of the present invention is best illustrated in the accompanying drawing, generally designated in Figure 1 by numeral 10. It should be noted that the reaction system depicted in Figure 1 is intended to be merely exemplary. The present invention is well suited for any conventional fluidized bed reaction systems.

Referring now to Figure 1, the reactor 10 comprises a reaction zone 12 and a freeboard zone which in this instance is also a velocity reduction zone 14. The height to diameter ratio of the reaction zone 12 can vary depending on the desired production capacity and residence time. The reaction zone 12 includes a fluidized bed comprising growing polymer particles, existing formed polymer particles and small amounts of catalyst. The fluidized bed in the reaction zone 12 is supported by a recycle stream 16 generally made up from feed and recycle fluids. The recycle stream enters the reactor through a distributor plate 18 in the bottom section of the reactor which aids in the uniform fluidization and the support of the fluidized bed in the reaction zone 12. In order to maintain the reaction zone fluidized bed 12 in a suspended and viable state, the superficial gas velocity (SGV) of the gas flow through the reactor generally exceeds the minimum flow required for fluidization which is typically from about 0.2 ft/sec (.061 m/s) to 0.5 ft/sec (0.153 m/s). Preferably, the SGV must be maintained at not less than about 0.7 ft/sec (0.214 m/s), and even more preferably not less than 1.0 ft/sec (0.305 m/w). The SGV should preferably not exceed 5.0 ft/sec (1.5 m/s), especially 3.5 ft/sec (1.07 m/s).

Polymer particles in the reaction zone 12 help to prevent the formation of localized "hot spots" and entrap and distribute catalyst particles throughout the fluidized bed. In operation, on start up, the reactor 10 is charged with a base of polymer particles before the recycle stream 16 flow is introduced. These polymer particles are preferably the same as the new polymer particles to be produced, however, if different, they are withdrawn with the newly formed first product after initiation of recycle and catalyst flows and establishment of reaction. This mixture is generally segregated from the later essentially new production for alternate disposition. The catalysts used in the improved process of this invention are usually sensitive to oxygen, therefore, the catalyst is preferably stored in a catalyst reservoir 20 under a blanket of a gas, inert to the stored catalyst, such as, but not limited to nitrogen or argon.

Fluidization of the fluidized bed in the reaction zone 12 is achieved by the high rate at which the recycle stream 16 flows into and through the reactor 10. Typically in operation, the rate of the recycle stream 16 is approximately ten to fifty times the rate at which the feed is introduced into the recycle stream 16. This high rate of the recycle stream 16 provides the superficial gas velocity necessary to suspend and mix the fluidized bed in the reaction zone 12 in a fluidized state.

The fluidized bed has a general appearance similar to that of a vigorously boiling liquid, with a dense mass of particles in individual motion caused by percolation and bubbling of gas through the fluidized bed. As the recycle stream 16 passes through the fluidized bed in the reaction zone 12, there is a pressure drop. This pressure drop is equal to or slightly greater than the weight of the fluidized bed in the reaction zone 12 divided by the cross-sectional area of the reaction zone 12, therefore making the pressure drop dependent on the reactor geometry.

Again referencing Figure 1, the make-up feed enters the recycle stream 16 at, but not limited to, a point 22. A gas analyzer 24 receives gas samples from the recycle stream line 16 and monitors the composition of the recycle stream 16 passing there-through. The gas analyzer 24 is also adapted to regulate the composition of the recycle stream line 16 and the feed to maintain a steady state in the composition of the recycle stream 16 in the reaction zone 12. The gas analyzer 24 usually analyzes samples taken from the recycle stream line 16 at a point between the freeboard zone 14 and a heat exchanger 26, preferably, between a compressor 28 and the heat exchanger 26.

The recycle stream 16 passes upward through the reaction zone 12 adsorbing heat generated by this polymerization process. That portion of the recycle stream 16 that does not react in the reaction zone 12 exits the reaction zone 12 and passes through the freeboard zone 14. As previously described, in this region, the velocity reduction zone 14, a major portion of entrained polymer drops back into the fluidized bed reaction zone 12 thereby reducing the carryover of solid polymer particles into the recycle stream line 16. The recycle stream 16 once withdrawn from the reactor above the freeboard zone 14 is then compressed in compressor 28 and passes through the heat exchanger 26, where heat generated by the polymerization reaction and gas compression are removed from the recycle stream 16 before returning the recycle stream 16 back to the reaction zone 12 in the reactor 10. The heat exchanger 26 is conventional in type and can be placed within the recycle stream line 16 in either a vertical or horizontal position. In an alternative embodiment of this invention, more than one heat exchanging zone or compression zone within the recycle stream line 16 may be included.

Referring back to Figure 1, the recycle stream 16 upon exiting the heat exchanger 26 returns to the bottom of the reactor 10. Preferably, a fluid flow deflector 30 is positioned below the gas distributor plate 18. The fluid flow deflector 30 prevents polymer from settling out into a solid mass and maintains entrainment of liquid and polymer particles within the recycle stream 16 below the distributor plate 18. The preferred type of fluid flow deflector plate is annular disc in shape, for example, the type described in U.S. Pat. No. 4,933,149. Using an annular type disc provides both a central upward and outer peripheral flow. The central upward flow assists in the entrainment of liquid droplets in the bottom head and the outward peripheral flow assists in minimizing buildup of polymer particles in the bottom head. The distributor plate 18 diffuses the recycle stream 16 to avoid the stream entering the reaction zone 12 in a centrally disposed upwardly moving stream or jet that would disrupt fluidization of the fluidized bed in the reaction zone 12.

The temperature of the fluidized bed is set dependent on the particle sticking point but is basically dependent on three factors: (1) the catalyst activity and rate of catalyst injection which controls the rate of polymerization and the attendant rate of heat generation, (2) the temperature, pressure and composition of recycle and makeup streams introduced into the reactor and (3) the volume of the recycle stream passing through the fluidized bed. The amount of liquid introduced into the bed either with the recycle stream or by separate introduction as described previously especially affects the temperature because the liquid vaporizes in the reactor and serves to reduce the temperature of the fluidized bed. Usually the rate of catalyst addition is used to control the rate of polymer production.

The temperature of the fluidized bed in the reaction zone 12 in the preferred embodiment remains constant in a steady state by continuously removing the heat of reaction. A steady state of the reaction zone 12 occurs when the amount of heat generated in the process is balanced with the amount of heat removed. This steady state requires that the total quantity of material entering the polymerization process is balanced by the amount of polymer and other material removed. Consequently, the temperature, the pressure, and the composition at any given point in the process is constant with time. There is no significant temperature gradient within most of the fluidized bed in the reaction zone 12, however, there is a temperature gradient in the bottom of the fluidized bed in the reaction zone 12 in the region above the gas distributor plate 18. This gradient results from the difference between the temperature of the recycle stream 16 entering through the distributor plate 18 at the bottom of the reactor 10 and temperature of the fluidized bed in the reaction zone 12.

Efficient operation of the reactor 10 requires good distribution of the recycle stream 16. Should growing or formed polymer and catalyst particles be allowed to settle out of the fluidized bed, fusion of the polymer can occur. This can result, in an extreme case, in the formation of a solid mass throughout the reactor. A commercial-sized reactor contains thousands of pounds or kilograms of polymer solids at any given time. The removal of a solid mass of polymer of this magnitude would entail great difficulty, requiring substantial effort and an extended downtime. By determining stable operating zones with the help ofFBD measurement improved polymerization processes can be performed in which the fluidization and support of fluidized bed in the reaction zone 12 within the reactor 10 are maintained.

In the preferred embodiment of the present invention, the liquid introduced into the reactor 10 is vaporized in order to achieve the increased reactor cooling capacity benefits of this polymerization process. High levels of liquid in the bed may promote the formation of agglomerates which cannot be broken up by mechanical forces present in the bed, thus leading potentially to defluidization, bed collapse and reactor shutdown. In addition, the presence of liquids can influence local bed temperatures and affect the capability of the process to produce polymer having consistent properties, since this requires an essentially constant temperature throughout the bed. For these reasons, the amount of liquid introduced into the fluidized bed under a given set of conditions should be no greater than the amount that will vaporize in the lower region of the fluidized bed, where mechanical forces associated with entry of the recycle stream through the distributor plate are sufficient to break up agglomerates formed by liquid-particle interaction.

It has been discovered in this present invention that, for given composition and physical characteristics of the product particles in the fluidized bed and otherwise given or related reactor and recycle conditions, by defining boundary conditions related to the composition of the gas flowing through the bed, a viable fluidized bed can be maintained at high cooling levels.

The observed decrease in fluidized bulk density may reflect an expansion of the dense particulate phase and change in bubble behavior within the fluidized bed for reasons not entirely clear.

Referring back to Figure 1, a catalyst activator, if required depending on the catalyst utilized, is generally added downstream from the heat exchanger 26. The catalyst activator may be introduced from a dispenser 32 into the recycle stream 16. However, the improved process of this present invention is not limited to the location of the insertion of the catalyst activator or any other required components such as catalyst promoters.

The catalyst from the catalyst reservoir can be injected either intermittently or continuously into the fluidized bed reaction zone 12 at a preferred rate at a point 34 which is above the gas distributor plate 18. In the preferred embodiment as described above, the catalyst is injected at a point where mixing with polymer particles within the fluidized bed 12 is best accomplished. Because some catalysts are very active, the preferred injection into the reactor 10 should be above the gas distributor plate 18, not below. Injection of catalyst in the area below the gas distributor plate 18 may result in the polymerization of product in this area, which would result eventually in the plugging of the gas distributor plate 18. Also, introducing the catalyst above the gas distributor plate 18 aids in the uniform distribution of catalyst throughout the fluidized bed 12 and, therefore, helps to preclude the formation of "hot spots" resulting from high local catalyst concentrations. Injection is preferably into the lower portion of the fluidized bed in the reaction zone 12 to provide uniform distribution and to minimize catalyst carryover into the recycle line where polymerization may lead to eventual plugging of the recycle line and heat exchanger.

A variety of techniques for catalyst injection may be utilized in the improved process of this present invention, for example the technique described in U.S. Pat. No. 3,779,712, the disclosure of which is incorporated herein by reference. An inert gas such as nitrogen or an inert liquid that readily volatilizes under reactor conditions is preferably used to carry the catalyst into the fluidized bed reaction zone 12. The catalyst injection rate and monomer concentration in the recycle stream 16 determines the rate of polymer production in the fluidized bed reaction zone 12. It is possible to control the production rate of the polymer produced by simply adjusting catalyst injection rate.

In the preferred operating mode of the reactor 10 utilizing the improved process of this present invention, the height of the fluidized bed in reaction zone 12 is maintained by the withdrawal of a portion of the polymer product at a rate consistent with the formation of the polymer product. Instrumentation for detecting any temperature or pressure changes throughout the reactor 10 and recycle stream 16 are useful to monitor changes in the condition of the fluidized bed in the reaction zone 12. Also, this instrumentation allows for either the manual or automatic adjustment of rate of catalyst injection or the temperature of the recycle stream.

In operation of the reactor 10, the product is removed from the reactor through a discharge system 36. The discharge of polymer product is preferably followed by separating fluids from the polymer product. These fluids may be returned to the recycle stream line 16 as a gas at point 38 and/or as a condensed liquid at point 40. The polymer product is routed to downstream processing at point 42. The discharge of polymer product is not limited to the method shown in Figure 1, which illustrates just one particular discharge method. Other discharge systems can be employed, for example, those disclosed and claimed in U.S. Pat. No's. 4,543,399, and 4,588,790 to Jenkins, et al..

In accordance with the present invention, a process is provided for increasing the reactor productivity of polymer production in a fluidized bed reactor employing an exothermic polymerization reaction by cooling the recycle stream to below its dew point and returning the resultant recycle stream to the reactor. The recycle stream containing greater than 15 weight percent liquid can be recycled to the reactor to maintain the fluidized bed at a desired temperature.

Depending on the target material different recycle conditions may be adopted providing reactor productivity levels not previously envisaged.

Firstly, there may be produced for example a film grade material in which the recycle stream has a butene/ethylene mole ratio of from 0.00 to 0.60, preferably 0.30 to 0.50 or a 4-methyl-pentene-1/ethylene mole ratio of from 0.00 to 0.50, preferably 0.08 to 0.33 or a hexene/ethylene mole ratio of from 0.00 to 0.30, preferably 0.05 to 0.20; or an octene-1/ethylene mole ratio of from 0.00 to 0.10, preferably 0.02 to 0.07; a hydrogen/ethylene mole ratio of from 0.00 to 0.4, preferably 0.1 to 0.3; and an isopentane level of from 3 to 20 mol% or an isohexane level of from 1.5 to 10 mol% and in which the cooling capacity of the recycle stream is at least 40 Btu/lb, preferably at least 50 but/lb or the weight percent condensed is at least 15.

Secondly, the process may be used to yield a molding grade material in which the recycle stream has a butene-1/ethylene mole ratio of from 0.00 to 0.60, preferably 0.10 to 0.50 or a 4-methyl-pentene-1/ethylene mole ratio of from 0.00 to 0.50, preferably, 0.08 to 0.20 or a hexene/ethylene mole ratio of from 0.00 to 0.30, preferably 0.05 to 0.12 or an octene-1/ethylene mole ratio of from 0.00 to 0.10, preferably 0.02 to 0.04; a hydrogen/ethylene mole ratio of from 0.00 to 1.6, preferably 0.3 to 1.4; and an isopentane level of from 3 to 30 mol% or an isohexane level of from 1.5 to 15 mol% and in which the cooling capacity of the recycle stream is at least 40 Btu/lb, preferably at least 50 Btu/lb or the weight percent condensed is at least 15.

Also, high density grades may be made by a process in which the recycle stream has a butene-ethylene mole ratio of 0.00 to 0.30, preferably 0.00 to 0.15 or a 4-methyl-pentene-1/ethylene mole ratio of from 0.00 to 0.25, preferably 0.00 to 0.12 or a hexene/ethylene mole ratio of 0.00 to 0.15, preferably 0.00 to 0.07 or an octene-1/ethylene mole ratio of from 0.00 to 0.05, preferably 0.00 to 0.02; a hydrogen to ethylene mole ratio of 0.00 to 1.5, preferably 0.3 to 1.0; and an isopentane level of from 10 to 40 mol% or an isohexane level of from 5 to 20 mol% and in which the cooling capacity of the recycle stream is at least 60 Btu/lb, preferably at least 73 Btu/lb, and most preferably greater than at least 75 Btu/lb or the weight percent condensed is at least 12.

### EXAMPLE 1

A fluidized gas phase reactor was operated to produce a copolymer containing ethylene and butene. The catalyst used is a complex of tetrahydrofuran, magnesium chloride and titanium chloride reduced with diethyl aluminum chloride (diethyl aluminum chloride-to-tetrahydrofuran molar ratio of 0.50) and tri-n-hexyl aluminum (tri-n-hexyl aluminum-to-tetrahydrofuran molar ratio of 0.30) impregnated on triethyl aluminum treated silicon dioxide. The activator is triethyl aluminum (TEAL).

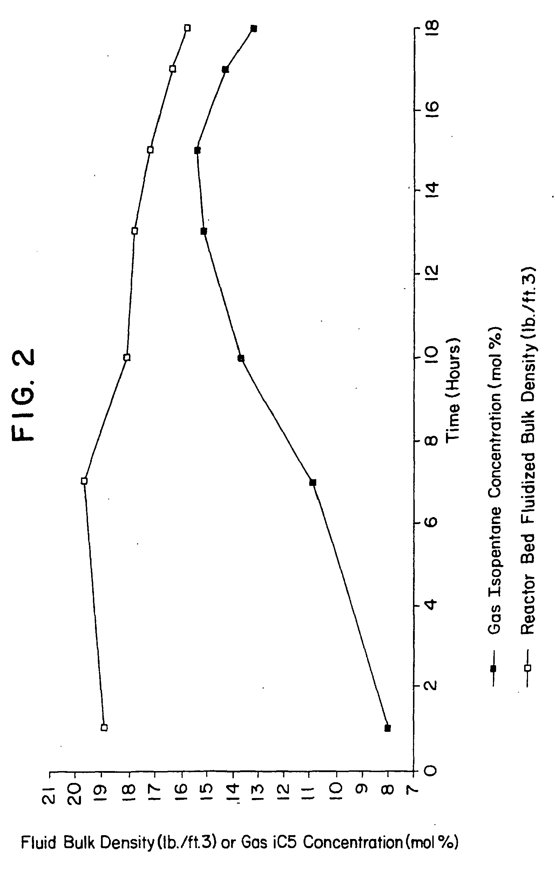

The data in Table 1 and illustrated in Figure 2 shows the reactor parameters as the isopentane level is gradually increased to achieve the added cooling necessary to obtain higher reactor productivity. This example shows that excessive amounts of isopentane leads to changes in the fluidized bed and ultimately to its disruption in the formation of hot spots and agglomerates necessitating reactor shut-down. As the concentration of isopentane increases the fluidized bulk density decreases indicating a change in the bed fluidization which also resulted in an increase in the bed height. The catalyst rate was decreased to reduce the bed level. In addition, the isopentane concentration was reduced in an attempt to reverse the change in the fluidized bed. However, at this point, although the bed height returned to normal, the disruption accompanied by hot spots and agglomerations, in the bed was irreversible and the reactor was shutdown.

**TABLE 1**

| **Time (Hours)** | **1** | **7** | **10** | **13** | **15** | **17** | **18** |
|---|---|---|---|---|---|---|---|
| Resin Melt Index (dg/10 min) | 1.01 | 1.04 | 1.03 | 1.12 | 1.09 | 1.11 | 1.11 |
| Resin Density (g/cc) | 0.9176 | 0.9183 | 0.9190 | 0.9190 | 0.9183 | 0.9193 | 0.9193 |
| | | | | | | | |
| Recycle Stream Compositions: | | | | | | | |
| Ethylene | 47.4 | 46.0 | 44.7 | 44.1 | 44.0 | 45.9 | 46.3 |
| Butene-1 | 19.0 | 18.1 | 17.3 | 17.0 | 16.9 | 18.5 | 19.5 |
| Hexene-1 | | | | | | | |
| Hydrogen | 9.5 | 9.4 | 9.3 | 9.3 | 8.9 | 8.7 | 8.9 |
| Isopentane | 8.0 | 10.8 | 13.7 | 15.1 | 15.4 | 14.3 | 13.2 |
| C₆ Saturated Hydrocarbons | | | | | | | |
| Nitrogen | 14.3 | 13.9 | 13.3 | 12.8 | 13.2 | 11.2 | 10.7 |
| Ethane | 1.8 | 1.8 | 1.7 | 1.7 | 1.6 | 1.4 | 1.4 |
| Methane | | | | | | | |
| C₈ Saturated Hydrocarbons | | | | | | | |
| | | | | | | | |
| Recycle Gas Dew Point (°F) | 142.9 | 153.5 | 163.8 | 168.3 | 170.1 | 168.8 | 165.0 |
| Recycle Gas Dew Point (°C) | 61.6 | 67.5 | 73.2 | 75.7 | 76.7 | 76.0 | 73.9 |
| | | | | | | | |
| Reactor Inlet Temperature (°F) | 126.2 | 135.6 | 143.5 | 144.0 | 149.0 | 150.2 | 146.3 |
| Reactor Inlet Temperature (°C) | 52.3 | 57.6 | 61.9 | 62.2 | 65.0 | 65.7 | 63.5 |
| | | | | | | | |
| Liquid in Recycle gas (wt%) | 11.4 | 12.1 | 14.3 | 17.4 | 14.5 | 11.6 | 12.3 |
| | | | | | | | |
| Reactor Temperature (°F) | 182.4 | 182.1 | 182.7 | 182.8 | 183.1 | 184.8 | 185.2 |
| Reactor Temperature (°C) | 83.6 | 83.4 | 83.7 | 83.8 | 83.9 | 84.9 | 85.1 |
| | | | | | | | |
| Reactor Pressure (psig) | 311.9 | 311.5 | 314.2 | 313.4 | 314.7 | 313.5 | 312.6 |
| Reactor Pressure (kPag) | 2150.5 | 2147.7 | 2166.3 | 2160.8 | 2169.8 | 2161.5 | 2155.3 |
| | | | | | | | |
| Reactor Superficial Gas Velocity (Ft/sec) | 2.29 | 2.30 | 2.16 | 2.10 | 1.92 | 2.00 | 2.11 |
| Reactor Superficial Gas Velocity (m/sec) | 0.70 | 0.70 | 0.66 | 0.64 | 0.59 | 0.61 | 0.64 |
| | | | | | | | |
| Reactor Bed Height (ft) | 43.4 | 43.3 | 43.5 | 49.3 | 51.3 | 45.8 | 45.4 |
| Reactor Bed Height (m) | 13.2 | 13.2 | 13.3 | 15.0 | 15.6 | 14.0 | 13.8 |
| | | | | | | | |
| Resin Settled Bulk Density (lb/ft³) | 30.1 | 30.2 | 30.2 | 30.2 | 30.0 | 29.9 | 29.9 |
| Resin Settled Bulk Density (kg/m³) | 482.2 | 483.8 | 483.8 | 483.8 | 480.6 | 479.0 | 479.0 |
| | | | | | | | |
| Reactor Bed Fluidized Bulk Density (lb/ft³) | 18.9 | 19.6 | 18.1 | 17.8 | 17.2 | 16.4 | 15.8 |
| Reactor Bed Fluidized Bulk Density (kg/m³) | 302.8 | 314.0 | 290.0 | 285.2 | 275.5 | 262.7 | 253.1 |
| | | | | | | | |
| Ratio of Fluidized Bulk Density to Settled Bulk Density | 0.63 | 0.65 | 0.60 | 0.59 | 0.57 | 0.55 | 0.53 |
| | | | | | | | |
| Space Time Yield (lb/hr-ft³) | 9.6 | 9.5 | 9.3 | 8.5 | 6.6 | 7.1 | 7.3 |
| Space Time Yield (kg/hr-m³) | 153.0 | 151.8 | 149.3 | 136.0 | 106.0 | 113.8 | 117.2 |
| | | | | | | | |
| Production Rate (klb/hr) | 68.5 | 67.8 | 67.0 | 69.2 | 56.1 | 53.8 | 54.9 |
| Production Rate (Tons/hr) | 31.1 | 30.7 | 30.4 | 31.4 | 25.4 | 24.4 | 24.9 |
| | | | | | | | |
| Reactor Productivity (lb/hr-ft²) | 415 | 411 | 406 | 419 | 340 | 326 | 332 |
| Reactor Productivity (kg/hr-m²) | 2026 | 2006 | 1982 | 2045 | 1660 | 1591 | 1621 |
| | | | | | | | |
| Recycle Stream Enthalpy Change (Btu/lb) - | 42 | 40 | 40 | 42 | 37 | 34 | 33 |
| Recycle Stream Enthalpy Change (cal/g) | 23 | 22 | 22 | 23 | 21 | 19 | 18 |

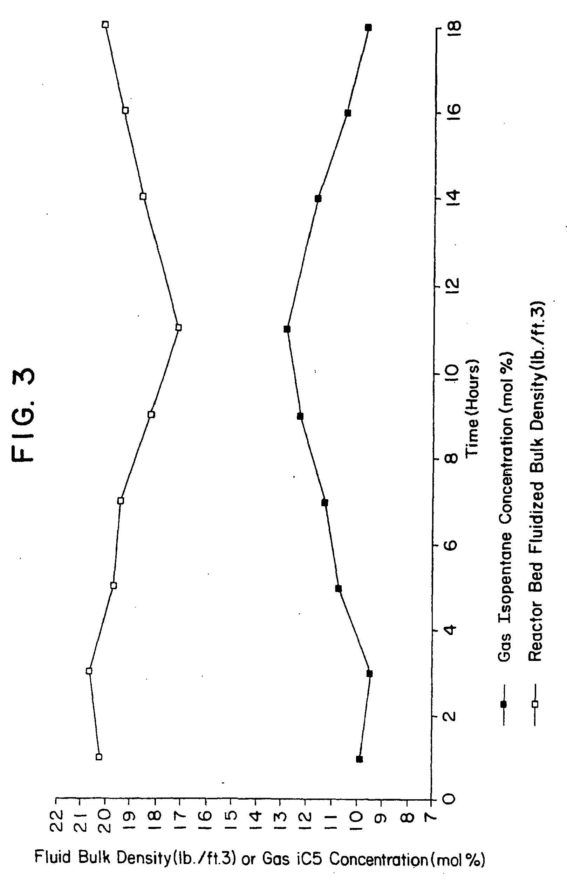

Furthermore, in a second run, Table 2 and Figure 3 shows that as the concentration of isopentane was gradually increased the fluidized bulk density decreased as expected from Table 1. However, this time the fluidized bulk density gradually increased as a result of reducing the concentration of isopentane. Thus, in this instance, the change in fluidization in the bed was recoverable and reversible.

**TABLE 2**

| **Time (Hours)** | **1** | **3** | **5** | **7** | **9** | **11** | **14** | **16** | **18** |
|---|---|---|---|---|---|---|---|---|---|
| Resin Melt Index (dg/10 min) | 0.92 | 0.99 | 1.08 | 1.02 | 1.05 | 1.09 | 1.11 | 1.05 | 0.98 |
| Resin Density (g/cc) | 0.9187 | 0.9184 | 0.9183 | 0.9181 | 0.9178 | 0.9177 | 0.9186 | 0.9184 | 0.9183 |
| Recycle Stream Compositions: | | | | | | | | | |
| Ethylene | 52.6 | 53.2 | 52.6 | 52.0 | 52.1 | 51.6 | 52.9 | 52.8 | 52.8 |
| Butene-1 | 20.0 | 19.8 | 19.7 | 20.4 | 19.7 | 19.8 | 19.1 | 20.1 | 20.1 |
| Hexene-1 | | | | | | | | | |
| Hydrogen | 9.7 | 10.2 | 10.3 | 9.9 | 9.9 | 9.9 | 10.4 | 10.0 | 9.6 |
| Isopentane | 9.9 | 9.5 | 10.7 | 11.2 | 12.2 | 12.8 | 11.5 | 10.4 | 9.6 |
| C₆ Saturated Hydrocarbons | | | | | | | | | |
| Nitrogen | 8.7 | 8.0 | 7.3 | 6.7 | 6.3 | 6.0 | 6.5 | 7.3 | 8.1 |
| Ethane | 1.2 | 1.2 | 1.1 | 1.1 | 1.1 | 1.1 | 1.2 | 1.2 | 1.3 |
| Methane | | | | | | | | | |
| C₈ Saturated Hydrocarbons | | | | | | | | | |
| Recycle Gas Dew Point (°F) | 154.1 | 152.5 | 156.9 | 160.0 | 161.9 | 165.0 | 159.4 | 155.9 | 153.3 |
| Recycle Gas Dew Point (°C) | 67.8 | 66.9 | 69.4 | 71.1 | 72.2 | 73.9 | 70.8 | 68.8 | 67.4 |
| Reactor Inlet Temperature (°F) | 124.2 | 118.3 | 119.7 | 125.3 | 127.3 | 133.2 | 128.0 | 126.2 | 123.0 |
| Reactor Inlet Temperature (°C) | 51.2 | 47.9 | 48.7 | 51.8 | 52.9 | 56.2 | 53.3 | 52.3 | 50.6 |
| Liquid in Recycle gas (wt%) | 22.2 | 24.9 | 27.4 | 26.4 | 27.0 | 24.3 | 23.2 | 22.1 | 22.2 |
| Reactor Temperature (°F) | 184.6 | 185.2 | 184.1 | 183.4 | 183.5 | 183.3 | 182.8 | 181.9 | 181.8 |
| Reactor Temperature (°C) | 84.8 | 85.1 | 84.5 | 84.1 | 84.2 | 84.0 | 83.8 | 83.3 | 83.2 |
| Reactor Pressure (psig) | 314.7 | 315.2 | 315.2 | 315.1 | 315.3 | 314.8 | 312.9 | 312.9 | 313.4 |
| Reactor Pressure (kPag) | 2170.0 | 2173.3 | 2173.3 | 2172.5 | 2174.2 | 2170.7 | 2157.6 | 2157.7 | 2160.6 |
| Reactor Superficial Gas Velocity (Ft/sec) | 1.73 | 1.74 | 1.75 | 1.76 | 1.77 | 1.76 | 1.75 | 1.74 | 1.74 |
| Reactor Superficial Gas Velocity (m/sec) | 0.53 | 0.53 | 0.53 | 0.54 | 0.54 | 0.54 | 0.53 | 0.53 | 0.53 |
| Reactor Bed Height (ft) | 44.7 | 45.0 | 44.6 | 44.9 | 46.0 | 47.0 | 45.5 | 45.6 | 45.2 |
| Reactor Bed Height (m) | 13.6 | 13.7 | 13.6 | 13.7 | 14.0 | 14.3 | 13.9 | 13.9 | 13.8 |
| Resin Settled Bulk Density (lb/ft³) | 29.9 | 29.9 | 29.7 | 28.8 | 29.0 | 29.1 | 29.3 | 29.4 | 29.4 |
| Resin Settled Bulk Density (kg/m³)) | 479.0 | 479.0 | 475.8 | 461.4 | 464.6 | 465.4 | 468.6 | 471.3 | 471.8 |
| Reactor Bed Fluidized Bulk Density (lb/ft³) | 20.2 | 20.7 | 19.6 | 19.3 | 18.2 | 17.1 | 18.5 | 19.2 | 20.0 |
| Reactor Bed Fluidized Bulk Density (kg/m³) | 323.9 | 330.9 | 314.4 | 309.9 | 291.1 | 274.3 | 296.2 | 308.1 | 321.1 |
| Ratio of Fluidized Bulk Density to Settled Bulk Density | .68 | .69 | .66 | .67 | .63 | .59 | .63 | .65 | .68 |
| Space Time Yield (lb/hr-ft³) | 9.7 | 10.3 | 11.1 | 11.1 | 11.1 | 9.9 | 9.3 | 9.1 | 9.2 |
| Space Time Yield (kg/hr-m³) | 154.9 | 165.1 | 178.1 | 178.0 | 177.0 | 158.4 | 149.1 | 144.9 | 147.3 |
| Production Rate (klb/hr) | 71.3 | 76.6 | 82.2 | 82.3 | 84.0 | 76.8 | 69.9 | 68.0 | 68.5 |
| Production Rate (Tons/hr) | 32.3 | 34.7 | 37.3 | 37.3 | 38.1 | 34.8 | 31.7 | 30.8 | 31.1 |
| Reactor Productivity (lb/hr-ft²) | 432 | 464 | 498 | 498 | 509 | 465 | 423 | 412 | 415 |
| Reactor Productivity (kg/hr-m²) | 2109 | 2265 | 2431 | 2431 | 2485 | 2270 | 2065 | 2011 | 2026 |
| Recycle Stream Enthalpy Change (Btu/lb) | 54 | 59 | 61 | 60 | 61 | 55 | 52 | 51 | 52 |
| Recycle Stream Enthalpy Change (cal/g) | 30 | 33 | 34 | 33 | 34 | 31 | 29 | 28 | 29 |

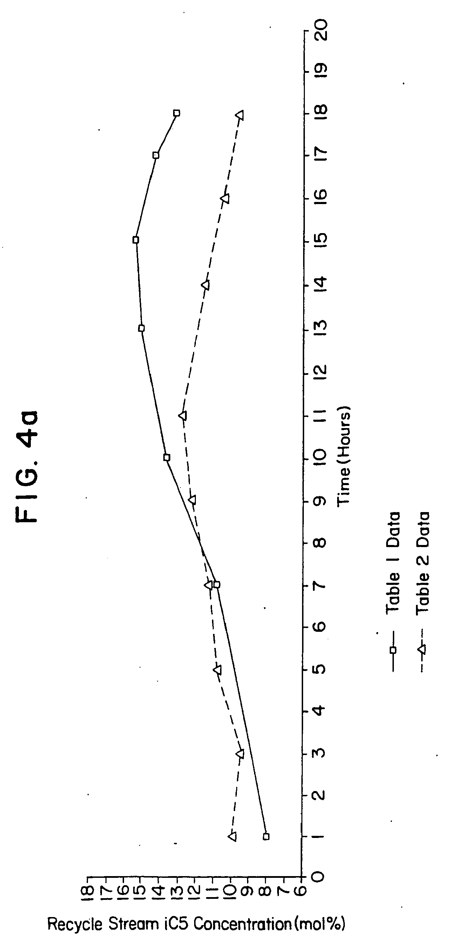

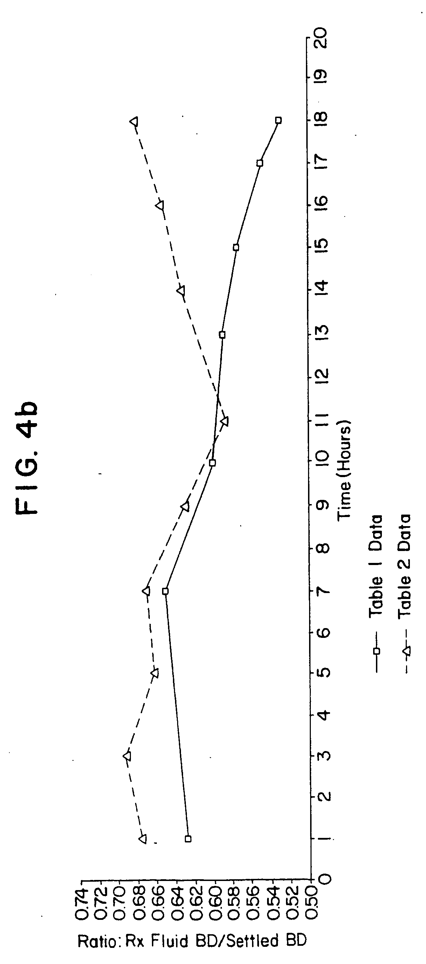

Therefore, Figure 4, a representation of the results of both Figures 1 and 2, clearly illustrates a point at which changes in bed fluidization are not reversible because of the excessive use of a condensable fluid. This point is defined to be where the ratio of the reactor bed fluidized bulk density to the settled bulk density is less than 0.59. Example 1 clearly demonstrates, in contrast to the disclosure in Jenkins, et al., that there is a limit for condensable materials useful to optimize the space time yield or reactor productivity of a reactor operating in condensed mode.

### EXAMPLE 2

The following examples were carried out in essentially the same way as Example 1 utilizing the same type of catalyst and activator to produce homopolymers and ethylene/butene copolymers of various density and melt index ranges.

**TABLE 3**

| **Run** | **1** | **2** | **3** | **4** | **5** |
|---|---|---|---|---|---|
| | | | | | |
| Resin Melt Index (dg/10 min) | 0.86 | 6.74 | 7.89 | 22.22 | 1.91 |
| Resin Density (g/cc) | 0.9177 | 0.9532 | 0.9664 | 0.9240 | 0.9186 |
| | | | | | |
| Recycle Stream Compositions: | | | | | |
| Ethylene | 53.1 | 40.5 | 49.7 | 34.1 | 44.0 |
| Butene-1 | 20.2 | | | 14.9 | 18.2 |
| Hexene-1 | | 0.6 | | | |
| Hydrogen | 8.9 | 17.7 | 26.5 | 25.0 | 11.9 |
| Isopentane | 9.7 | 3.7 | 0.7 | 14.1 | 9.6 |
| C₆ Saturated Hydrocarbons | | 7.0 | 10.2 | | |
| Nitrogen | 8.7 | 19.2 | 8.8 | 9.4 | 14.9 |
| Ethane | 1.7 | 9.4 | 4.0 | 2.5 | 3.3 |
| Methane | | 1.1 | 0.3 | | |
| C₈ Saturated Hydrocarbons | | 0.4 | 0.5 | | |
| | | | | | |
| Recycle Gas Dew Point (°F) | 154.0 | 172.6 | 181.6 | 162.1 | 148.5 |
| Recycle Gas Dew Point (°C) | 67.8 | 78.1 | 83.1 | 72.3 | 64.7 |
| | | | | | |
| Reactor Inlet Temperature (°F) | 115.2 | 107.8 | 117.7 | 135.0 | 114.2 |
| Reactor Inlet Temperature (°C) | 46.2 | 42.1 | 47.6 | 57.2 | 45.7 |
| | | | | | |
| Liquid in Recycle gas (wt%) | 28.6 | 25.4 | 27.6 | 21.8 | 24.4 |
| | | | | | |
| Reactor Temperature (°F) | 183.3 | 208.4 | 209.3 | 178.0 | 183.7 |
| Reactor Temperature (°C) | 84.1 | 98.0 | 98.5 | 81.1 | 84.3 |
| | | | | | |
| Reactor Pressure (psig) | 315.7 | 300.2 | 299.8 | 314.7 | 314.3 |
| Reactor Pressure (kPag) | 2176.7 | 2069.7 | 2066.8 | 2169.8 | 2167.2 |
| | | | | | |
| Reactor Superficial Gas Velocity (Ft/sec) | 1.69 | 2.76 | 2.36 | 1.74 | 1.73 |
| Reactor Superficial Gas Velocity (m/sec) | 0.52 | 0.84 | 0.72 | 0.53 | 0.53 |
| | | | | | |
| Reactor Bed Height (ft) | 47.2 | 43.0 | 42.0 | 44.3 | 45.6 |
| Reactor Bed Height (m) | 14.4 | 13.1 | 12.8 | 13.5 | 13.9 |
| | | | | | |
| Resin Settled Bulk Density (lb/ft³) | 28.3 | 23.2 | 29.0 | 24.5 | 29.3 |
| Resin Settled Bulk Density (kg/m³)) | 453.4 | 371.0 | 464.0 | 392.5 | 468.6 |
| | | | | | |
| Reactor Bed Fluidized Bulk Density (lb/ft³) | 19.6 | 16.7 | 21.7 | 15.7 | 19.1 |
| Reactor Bed Fluidized Bulk Density (kg/m³) | 314.0 | 267.9 | 347.4 | 251.5 | 305.7 |
| | | | | | |
| Ratio of Fluidized Bulk Density to Settled Bulk Density | 0.69 | 0.72 | 0.75 | 0.64 | 0.65 |
| | | | | | |
| Space Time Yield (lb/hr-ft³) | 10.8 | 14.3 | 13.0 | 7.7 | 9.8 |
| Space Time Yield (kg/hr-m³) | 172.8 | 228.8 | 208.0 | 123.2 | 157.2 |
| | | | | | |
| Production Rate (klb/hr) | 83.7 | 101.2 | 90.2 | 56.6 | 73.7 |
| Production Rate (Tons/hr) | 38.0 | 45.9 | 40.9 | 25.7 | 33.4 |
| | | | | | |
| Reactor Productivity (lb/hr-ft²) | 507 | 613 | 546 | 343 | 446 |
| Reactor Productivity (kg/hr-m²) | 2475 | 2992 | 2665 | 1674 | 2177 |
| | | | | | |
| Recycle Stream Enthalpy Change (Btu/lb) | 65 | 67 | 75 | 49 | 60 |
| Recycle Stream Enthalpy Change (Cal/g) | 36 | 37 | 42 | 27 | 33 |

These runs demonstrate the advantages of achieving higher reactor productivity at levels of condensed liquid exceeding 20 weight percent while maintaining the ratio of fluidized bulk density to settled bulk density of at least 0.59.

Because of the downstream handling processes, for example, product discharge systems, extruders and the like, certain reactor conditions had to be manipulated in order not to exceed the overall plant capacity. Therefore, the full advantages of this invention cannot be fully appreciated by the Examples shown in Table 3.

For instance, in run 1 of Table 3, the superficial gas velocity was kept low at around 1.69 ft/sec and therefore, the space-time-yield reflected is much less than would otherwise be the case. If the velocity was maintained at around 2.4 ft/sec the estimated space-time-yield would be in the excess of 15.3 lb/hr-ft³ would be achievable. Runs 2 and 3 of Table 3 show the effect of operating a reactor at a high superficial gas velocity and a weight percent condensed well above 20%. The space-time-yields achieved were around 14.3 and 13.0 lb/hr-ft³ demonstrating a significant increase in production rate. Such high STY or production rates are not taught or suggested by Jenkins, et al. Similar to run 1, run 4 of Table 3 shows a superficial gas velocity of 1.74 ft/sec at 21.8 weight percent condensed liquid. If the velocity in run 4 is increased to 3.0 ft/sec the achievable STY would increase from 7.7 to 13.3 lb/hr-ft³. If the velocity in run 5 is increased to 3.0 ft/sec the achievable space-time-yield would increase from 9.8 to 17.0 lb/hr-ft³. For all runs 1-4 the ratio of the fluidized bulk density to settled bulk density was maintained above at least 0.59.

### PAPER EXAMPLE 3

The data shown for the cases in Example 3, Table 4, were prepared by extrapolating information from actual operations by using thermodynamic equations well known in the art to project target conditions. This data in Table 4 illustrates the advantages of this invention if limitations of auxiliary reactor equipment is removed.

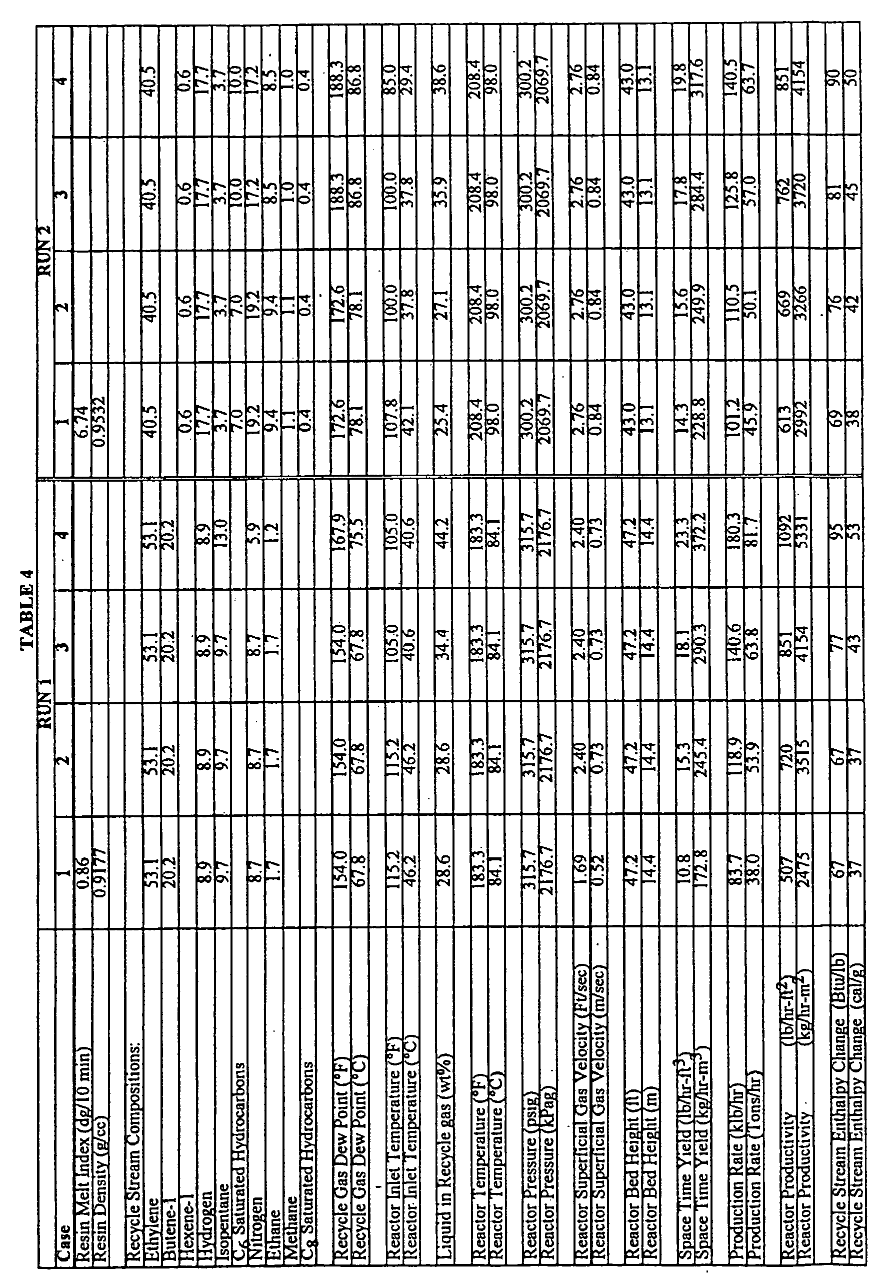

In run 1, the superficial gas velocity is increasing from 1.69 ft/sec to 2.40 ft/sec which results in a higher STY of 15.3 lb/hr-ft³ as compared to the initial 10.8 lb/hr-ft³. In a further step, the recycle inlet stream is cooled to 40.6°C from 46.2°C. This cooling increases the recycle condensed level to 34.4 wt. % and allows additional improvement in STY to 18.1. In the last step, the gas composition is changed by increasing the concentration of the condensable inert, isopentane, thereby improving the cooling capability. Through this means, the recycle condensed level further increases to 44.2 wt. % and the STY reaches 23.3. Overall, the incremental steps provide a 116% increase in production capacity from the reactor system.

In run 2, the recycle inlet temperature is cooled to 37.8°C from 42.1°C. This cooling increases the recycle condensed from 25.4 wt. % to 27.1 wt. % and an increase in STY from 14.3 to 15.6 lb/hr-ft³. In a further step, the concentration of C6 hydrocarbons is increased from 7 mol% to 10 mol%. This improvement in cooling capability allows an increase in STY to 17.8 lb/hr-ft². As a final step to demonstrate the value of this improvement, the recycle inlet temperature is again decreased to 29.4°C. This additional cooling allows an STY of 19.8 lb/hr-ft³ as the condensed level of the recycle stream reaches 38.6 wt. %. Overall, the incremental steps provide a 39% increase in production capacity from the reactor system.

## Claims

1. A gas fluidized bed polymerization process comprising passing a gaseous stream comprising olefin-type monomer through a fluidized bed reactor in the presence of a catalyst under reactive conditions to produce polymeric product and a stream comprising unreacted monomer gases, compressing and cooling said stream, mixing said stream with feed components and returning a gas and liquid phase to said reactor, which process further comprises cooling said stream such that the liquid phase is greater than 15 % by weight of the total weight of the returned stream and the stream composition is such that the ratio of fluidized bulk density to settled bulk density is over 17,8 to 30,2.

2. A process according to claim 1 in which the liquid phase is greater than 20 % by weight of the total weight of the returned stream.

3. A process according to claim 1 or 2 in which the stream contains a non-polymerizable saturated hydrocarbon having at least 3 carbon atoms to raise the dew point and permit additional cooling.

4. A process according to claim 3 in which the hydrocarbon is selected from the group consisting of propane, n-butane, isobutane, n-pentane, isopentane, neopentane, n-hexane, isohexane, other saturated C6 hydrocarbons, n-heptane, n-octane, other saturated C7 and C8 hydrocarbons and mixtures thereof.

5. A process according to any preceding claim in which the stream is cooled and passes at a velocity through the reactor such that the reactor productivity achievable exceeds 500 lb/(hr.ft²) (2441 kg/(hr.m²⁾).

6. A process according to any preceding claim, in which the liquid and gaseous component of the stream are added below a reactor distributor plate.

7. A process according to any preceding claim in which the polymeric product is
a film grade material having an MI of from 0,5 to 5,0 and density of from 0,900 to 0, 930, wherein the recycle stream has (I) butene-1 and ethylene at a molar ratio of from 0,00 to 0,60 or 4-methyl-pentene-1 and ethylene at a molar ratio of from 0,00 to 0,50 or hexene-1 and ethylene at a molar ratio of from 0,00 to 0,30 or octene-1 and ethylene at a molar ratio of from 0,00 to 0,10; (II) a hydrogen/ethylene mole ratio of from 0,00 to 0,4 and (III) an isopentane level of from 3 to 20 mol % or an isohexane level of from 1,5 to 10 mol % and in which the cooling capacity of the recycle stream is at least 40 Btu/lb (93 kJ/kg); or
a molding grade having an MI of from 4,0 to 150,0 and a density of from 0,920 to 0,939, wherein the recycle stream has (I) butene-1 and ethylene at a molar ratio of from 0,00 to 0,60 or 4-methyl-pentene-1 and ethylene at a molar ratio of from 0,00, to 0,50 or hexene-1 and ethylene at a molar ratio of from 0,00 to 0,30 or octene-1 and ethylene at a molar ratio of from 0,00 to 0,10; (II) a hydrogen/ethylene mole ratio of from 0,00 to 1,6 and (III) an isopentane level of from 3 to 30 mol % or an isohexane level of from 1,5 to 15 mol % and in which the cooling capacity of the recycle stream is at least 40 Btu/lb (93 kJ/kg); or
a high density material having an MI of from 2,0 to 70,0 and a density of from 0,940 to 0,970, wherein the recycle stream has (I) butene-1 and ethylene at a molar ratio of from 0,00 to 0,30 or 4-methyl-pentene-1 and ethylene at a molar ratio of from 0,00 to 0,25 or hexene-1 and ethylene at a molar ratio of from 0,00 to 0,15 or octene-1 and ethylene at a molar ratio of from 0,00 to 0,05; (II) a hydrogen to ethylene mole ratio of from 0,00 to 1,5 and (III) an isopentane level of from 10 to 40 mol % or an isohexane level of from 5 to 20 mol % and in which the cooling capacity of the recycle stream is at least 75 Btu/lb (174.5 kJ/kg);
all density units being in g/cm³ and the melt index MI being in g/10 min determined according to ASTM 1238 condition E.
